# EUROPEAN PATENT SPECIFICATION

(11) **EP 4 429 850 B1**
(45) Date of publication and mention of the grant of the patent: **17.06.2026**
(21) Application number: 22839188.4
(22) Date of filing: 14.12.2022
(51) Int. Cl.: B25J 15/06, B29C 31/08, B29C 70/54, B29C 70/30, B29D 99/00, B29L 31/08, B25J 15/00

(54) **VACUUM LIFTING DEVICE, VACUUM LIFTING ARRANGEMENT, SUPPORT ELEMENT AND METHOD**
VAKUUMHEBEVORRICHTUNG, VAKUUMHEBEANORDNUNG, STÜTZELEMENT UND VERFAHREN
DISPOSITIF DE LEVAGE SOUS VIDE, AGENCEMENT DE LEVAGE SOUS VIDE, ÉLÉMENT DE SUPPORT ET PROCÉDÉ

(30) Priority: 07.01.2022 EP 22150504
(43) Date of publication of application: 18.09.2024
(73) Proprietor: Siemens Gamesa Renewable Energy A/S, 7330 Brande (DK)
(72) Inventor: JOERGENSEN, Jens Grandjean, 9000 Aalborg (DK); NIELSEN, Mogens, 9220 Aalborg (DK)
(74) Representative: SGRE-Association
(86) International application number: PCT/EP2022/085878
(87) International publication number: WO 2023/131487

(56) References cited:
- WO-A1-2021/163003
- WO-A1-2021/239954
- DE-A1- 102011 056 029
- US-A1- 2006 034 968
- US-A1- 2017 050 393
- US-A1- 2021 130 118

## Description

The invention relates to a vacuum lifting device according to claim 1. Furthermore, the invention relates to a method for lifting a preform element forming at least a section of a wind turbine blade according to claim 14.

It is known to use so-called preform elements or preforms in the fabrication of wind turbine blades. The preform element comprises one or more layers of a fiber-based fabric which may be attached to each other and/or to further components, but which are not infused with resin yet. These preform elements can be used to facilitate the manufacture of a wind turbine blade since they enable the mutual arrangement of a plurality of layers of a fiber-based material used for forming the shell of the wind turbine blade. Besides one or more layers of a fabric material, the preform elements can also comprise further elements, for instance rigid core elements or the like, which may also be arranged simultaneously with the fabric material. WO 2021/163003 A1 discloses a vacuum lifting device and US 2017/050393 A1 discloses a method for lifting a preform element forming at least a section of a wind turbine blade.

The rigid components may be arranged in particular in the center of a preform element to be fabricated so that the preform element comprises fiber-based material at its surfaces. Since this fiber-based material is not infused with a resin in the preform element, the fiber layers are porous, so that traditional vacuum lifting yokes cannot be used for lifting the preform element after its manufacture.

Generally, a vacuum lifting yoke comprises one or more suction cups to create a vacuum, or a low pressure, respectively, to enable lifting of a component attached to the suction cup. However, when the suction cup is attached to a porous material, or an object with a porous surface, respectively, air may leak from the outside of the suction cup into the suction volume of the suction cup and therefore counteract the creation of the low pressure and therefore also the lifting process. The leakage of air significantly reduces the adherence of the suction cup on the surface of the object to be lifted and therefore may prevent the lifting of an at least partly porous object with the vacuum lifting yoke. In this case, also the usage of additional suction cups for creating a higher overall vacuum strength will not lead to the ability to lift the object.

Another method for lifting objects is the usage of the so-called Bernoulli grippers or Vortex grippers which use pressurized air instead of vacuum suction. An adherence of the gripper to the object is caused in this case by pressing a pressurized airflow between the gripper and the surface of the object. In case of a Bernoulli gripper, there is an airflow from a center outwards in a radial direction, wherein in a Vortex gripper a rotating airflow is used. Also, a combination of Bernoulli grippers and needle grippers are available. Nevertheless, due to the rely on airflow, also Bernoulli grippers and Vortex grippers are not suitable for lifting porous material.

Known means for lifting porous materials are for instance needle grippers, which do not rely on airflow but on a mechanical gripping by introducing needles into the porous material for attaching the material during the lifting procedure. By using these needle grippers, there may be the risk that the needles damage the material and/or that broken needles remain in the material adversely affecting a future processing of the material.

In WO 2020/178387 A1, a lifting device comprising a frame structure attached to a plurality of needle grippers or suction cups is disclosed. The needle grippers or suction cups are provided on different arms of the frame structure, wherein the frame structure is used as a lifting yoke for lifting a preform for a wind turbine blade.

The invention is based on the objective problem to provide an improved vacuum lifting device, which is in particular capable of lifting objects comprising at least partly of a porous material.

According to this invention, this problem is solved by a vacuum lifting device as initially described, wherein the vacuum lifting device comprises at least one flat surface cover, wherein the surface cover is adapted to cover a portion of a surface of a lifted object in a cover area surrounding the suction cup section, wherein the surface cover extends from an edge of the suction cup section around the suction cup section.

The flat surface cover is arranged adjacently to the inner suction volume and extends from the edge of the three-dimensional suction cup section to the direction opposite to the inner suction volume. The flat surface cover protruding from the edge of the suction cup section allows for covering a portion of a surface of the object to be lifted directly adjacent to the inner suction volume. The flat surface cover is air-tight so that it prevents air leakage from the vicinity of the suction cup through the material into the inner suction volume when a vacuum or a low pressure is applied to the suction volume. Such an air flow would reduce the adherence of the suction cup to the object and therefore counteract the lifting capabilities of the suction cup, or of a lifting device, respectively.

By providing the flat surface cover, a cover around the suction cup is created. This cover closes a least a section of the porous surface of the object in a cover area so that no air can leak from the vicinity under the edge of the suction cup and into the inner suction volume. Depending on the size of the surface cover, the entire surface of at least a part of the surface of the object is covered by the surface cover, so that the air leakage from the surface of the object can be significantly reduced or even eliminated.

The longer the distance is, which the air has to pass from the outside through the porous material to the inner suction volume, the less influence on the lifting capabilities of the suction cup is given. Advantageously, even by shielding only a limited area around the suction cup with the surface cover from air leakages, the lifting capabilities of the suction cup section and therefore of the entire vacuum lifting device can be remarkably increased for lifting objects with porous surfaces, and/or objects comprising or consisting of a porous material. The reduction of the leaking airflow from the surface of the object to be lifted reduces the total leak of air into the suction cup so that the lifting capacity can be increased advantageously.

The lifting device may comprise on or more suction cup sections. The suction cup sections can each form an individual suction cup, which may have for instance a circular shape. Also other shapes of the suction cup, like a square shape, a triangular shape, or other polygonal shapes, are possible. Also, the diameter of the suction cup section, or the size of the inner suction volume in the unattached state of the suction cup, may vary and may be chosen depending on the object to be lifted by the vacuum lifting device. The same applies to the number of suction cups of the vacuum lifting device, which may also be chosen in dependence of the weight and the size of the object to be lifted. The suction cup sections and the surface cover is formed from an air-tight material, for instance a polymer material or the like. Aside from preform elements for manufacturing wind turbine rotor blades, the vacuum lifting device can also be used for lifting other materials or components, in particular materials or components which comprise a porous surface and which are hence not liftable or at least not securely liftable by standard suction cups.

Preferably, the lifting device comprises a plurality of suction cup sections, wherein each suction cup section comprises a separate surface cover, or wherein the plurality of suction cup sections and/or a mutual continuous surface cover of the suction cup sections is formed by at least one mat-shaped cover element. By providing a plurality of suction cup sections, or a plurality of suction cups, respectively, at a lifting device, larger and/or heavier objects can be lifted.

To avoid the ingress of air into the inner volumes of a plurality of suction cup sections, it is possible that each suction cup section has a separate surface cover. Alternatively, it is also possible that at least one mutual continuous surface cover is provided which forms a surface cover for a plurality of suction cup sections, in particular for each suction cup section of the vacuum lifting device.

The mutual cover section may be provided in particular as a mat-shaped cover element. The mat-shaped cover element may comprise a plurality of openings which correspond to the size of the suction cup sections so that it can be placed between the suction cup sections and the object to be lifted for covering the surface of the object to be lifted in the vicinity of all suction cup sections of the vacuum lifting device.

The suction cup sections as well as the separate, individual surface covers, or the mutual continuous surface cover in form of the cover element, respectively, can be provided as individual pieces. In order to facilitate the lifting process, the suction cup sections and the surface covers may be joined together. Alternatively, the suction cups and the surface cover may be formed as an integral element.

Preferably, the surface cover is at least partly flexible and/or the surface cover comprises one or more shaping sections that define at least partly a shape of the surface cover. The surface cover, which may be provided either as a continuous layer or as an individual, separate surface cover for each suction cup section as previously described, surrounds the suction cup section and may be at least partly flexible in order to adapt to the shape of the surface of the object to be lifted. It is therefore possible to also lift objects which have a bended surface, for instance a concave or convex top surface to which the vacuum lifting device is attached.

It is possible that the surface cover comprises one or more shaping sections that locally stiffen the surface cover, so that it is at least partly stiff, for instance to retain a flat surface without wrinkles that can be brought into contact with the surface of the object to be lifted. This facilitates the arrangement of the lifting device on the surface of the object to be lifted and avoids for instance a manual placement or a manual flattening of the surface cover.

For instance, the surface cover and/or the suction cup sections may be manufactured from a flexible material like silicone or a rubber-based material. To also provide one or more shaping sections, it is possible, that the surface cover is provided in the form of a flexible material with one or more upper stiffer layers on top of the flexible material. As shaping sections, for instance a stiffer material like a canvas material, a plurality of wires and/or wire grids or the like may be used.

Preferably, the surface cover comprises a smooth or structured surface for covering the surface of the object to be lifted. The side of the surface cover which is in direct contact with the object to be lifted can be regarded as the bottom surface of the surface cover, or of the lifting device, respectively. This bottom surface or bottom side can either be smooth and flat or comprise a structured surface, for instance with knobs and/or grooves. A flat surface can be used by materials with lesser porosity and/or with a smoother surface, wherein the structured surface can for instance be used with objects that have a porous surface with larger cavities, or with a higher roughness, respectively.

Preferably, the at least one suction cup section is connected to at least one flow sensor, at least one pressure sensor and/or at least one valve. There may be for instance one pressure sensor, one flow sensor and/or one valve for each suction cup section so that an individual monitoring of pressure and/or flow at each individual suction cup section is possible. Each suction cup section may also be connected to a valve so that an individual shut-off of each suction cup section becomes possible.

It is also possible that a flow sensor, a temperature sensor and/or a valve are assigned to a plurality of suction cup sections measuring the flow and/or the pressure for a group of suction cup sections, or enabling the shut-off of the group of suction cup sections, respectively. The suction cup sections can be connected immediately to the sensors and/or to the valve or there can be a connection via a connection element, for example via a tube or a hose.

By providing suction cup sections with flow sensors, pressure sensors and/or valves, an automated control of the lifting process becomes possible. The sensors and/or the valve may be connected to a control unit, which may be adapted for monitoring the pressure, the flow and/or the state of the valves of the vacuum lifting device. The control unit may also control the valves, in particular in order to open and close the individual valves.

For instance, if several suction cup sections are connected in series to a vacuum pump device, the failure of one suction cup section, hence a loss of the adherence of the suction cup section to the object to be lifted, would lead to a pressure loss in all other suction cups of the serial connection due to the air intake through the suction cup section that lost contact to the surface. The usage of the sensors and the control unit would allow in this case for instance to automatically detect the loss of pressure using the at least one pressure sensor and/or the at least one flow sensor. In case of an individual valve, the control unit may close the valve of the failed suction cup section, so that the other remaining suction cup sections can be used normally for holding the object to be lifted. Furthermore, it is possible that the control unit increases the vacuum, or further reduces the absolute pressure, respectively, in the other suction cup sections so that the failure of one or more suction cup sections can be compensated.

Furthermore, by providing valves at the individual suction cup sections, or at connection means like hoses and/or tubes, which connect a plurality of suction cup sections, a shutdown of suction cup sections which are not needed in a lifting process becomes possible, in particular to avoid that air is sucked into the suction cup sections from the environment when the suction cup sections are not required for lifting the object.

Preferably, the surface cover comprises one or more channels communicating with the inner suction volume, wherein the channels extend through a portion of the cover area. For instance, the inner suction volume may be at least partly hemispheric or the like, wherein the channels may be extending radially from this volume along the surface of the cover portion that comes into contact with the surface of the object to be lifted. By providing such channels, the lifting of heavy components with a comparably low permeability for air can be facilitated. For lifting light components with a high air permeability, the usage of concentrated suction points, hence only using the inner suction volume, might be advantageous to decrease the air leakage from surrounding into the inner suction volume.

In a preferred embodiment, the inner suction volume is at least partly filled with an air-permeable material. The material may be used to provide stability to the suction cup section and hence to allow for distributing the low pressure of the inner suction volume over a larger distance. For instance, when the length and/or the width of the suction cup section in the directions of the area of the surface of the object to be lifted are large compared to a height perpendicular to the surface of the object, the permeable material arranged in the inner suction volume may stiffen or stabilize the inner suction volume when the vacuum is applied. Advantageously, this allows for providing large suction cup sections which exhibit a large contact area between their inner suction volume and the surface of the object to be lifted.

Preferably, the lifting device comprises at least one elongated air-guiding structure communicating with the inner suction volume. For example, the air-guiding structure may be a vacuum tube, a vacuum hose or a hollow profile. The different suction cup sections of a vacuum lifting device comprising a plurality of suction cup sections may each be communicating with at least one air-guiding structure, so that by connecting a pumping means to the air-guiding structure, a vacuum, or a low pressure, respectively, in the inner suction volumes of the suction cup section can be created. In particular, each air-guiding structure may be connected to a plurality of suction cup sections to facilitate the construction of the vacuum lifting arrangement. It is possible that pressure sensors, flow sensors and/or valves each connected to one or more of the suction cup sections are arranged inside or directly connected to the air-guiding structures.

Preferably, the lifting device comprises a plurality of air-guiding structures, wherein the air-guiding structures are arranged in parallel to each other and/or to the surface cover, or wherein the air-guiding structures form at least a part of a frame structure at least sectionally extending vertically and/or horizontally to the surface cover. Air-guiding structures arranged parallel to each other and/or parallel to the surface cover enable for instance a stiffening of the surface cover in one direction. Orthogonal to the direction of the extension of the elongated air guiding structures, the cover remains flexible, so that an adaption of the surface cover to a concave or a convex surface of an object to be lifted can be obtained. Advantageously, this provides a great flexibility and adaptability to different radii of curvature of the surface of the object to be lifted.

The air-guiding structures may be distributed evenly or unevenly over the cover section. It is in particular possible, that in the edge regions of a mutual cover element used for providing the surface covers to a plurality of suction cup sections, more air-guiding structures are arranged to increase the stability and the adherence of the object to the vacuum lifting device, in particular in the edge regions.

It is also possible that the air-guiding structures are arranged as a frame structure supporting the surface cover. Therefore, for instance vertically arranged air-guiding structures may be connected to the suction cup portions, wherein the air-guiding structures are then connected to one or more vertically arranged air-guiding structures, so that a frame structure is obtained. In addition to the air-guiding structures, the frame structure may also comprise additional structures like struts, which are not used for air transport, or vacuum application, respectively, and which may be used for stabilizing the frame structure.

The air-guiding structures may be arranged in such manner that they can be attachable to a crane, for instance by connecting them to an attachment means connectable to a crane. The allows for lifting the vacuum lifting device, in particular for arranging it on a preform element used for the fabrication of a wind turbine blade. In addition, the crane can also be used to lift the vacuum lifting device together with the object to be lifted once the vacuum has been applied and the object is attached to the vacuum lifting device.

The vacuum lifting arrangement according to the invention comprises a vacuum lifting device according to the invention and a support element comprising a support surface for supporting the object to be lifted.

In particular, the support surface can be a molding surface used in the fabrication of a preform element. The support surface may support the preform element to be lifted prior to the attachment of the vacuum lifting arrangement so that also an at least partly flexible preform element is maintained at a constant shape. The vacuum lifting device may for instance be adapted to the shape of the preform element to be lifted. In addition, the vacuum lifting arrangement may also comprise a pumping means connected or connectable to the at least one suction cup section, for instance by one or more connection means like tubes and/or hoses.

Preferably, the support element comprises one or more air-permeable cavities allowing for the passage of air through the support element into an object arranged on the support surface. In principle, also lifting of a porous component from a closed surface, or an air-tight surface, respectively, like the surface that is normally used for the fabrication of preform elements, may be possible.

However, depending on the thickness of the element, it might be the case that the vacuum lifting arrangement sticks to the support surface of the support element, in particular if the object to be lifted comprises a large porosity and only a small thickness. Due to the porosity of the object to be lifted, a low pressure may also be created inside the component and therefore between the lifting device and the support surface of the support element. Therefore, providing one or more air-permeable cavities that enable the passage of air through the support element into the object arranged on the support surface may reduce the attachment of the vacuum lifting device to the support surface so that lifting of the object is facilitated.

Preferably, the air-permeable cavities are formed by at least one layer of an at least partly air-permeable and/or porous material of the support surface, by one or more grooves in the support surface and/or by one or more through-holes in the support surface of the support element. Hence, for allowing the air of the surrounding to leak through the support surface, the support surface may comprise at least one layer of an at least partly air-permeable material like a fiber glass sandwich fabric comprising at least a partly hollow inner structure allowing for airflow arranged between two air-tight or air-permeable surface layers. The air-guiding inner structure may for instance be connected to the surface by providing holes in an air-tight top surface and/or by using a material which already comprises holes or openings as top surface so that air supplied from the edges and/or from the bottom side of the air-guiding inner structure can flow into the inner suction cup volumes. The usage of other types of porous materials with internal channels or voids is also possible. Preferably, the permeability for air of the air-permeable and/or porous material is larger than the permeability of the object to be lifted from the support surface.

In addition or alternatively, one or more grooves in the support surface and/or one or more through holes in the support surface of the support element can be provided as air permeable cavities. The grooves may for instance be provided as regular grooves in the surface or by a rough texture of the support surface of the support element. The through-holes may for instance be slits or circular holes and may extend from the support surface to a bottom surface of the support element so that air from the surroundings of the support element can pass through the through-holes to the inner suction volumes of the suction cup sections.

Preferably, the vacuum lifting arrangement comprises at least one air pressuring means connected to the air-permeable cavities, which is adapted for providing pressurized air to the cavities. By providing pressurized air to the cavities of the support surface and hence to the bottom surface of the object to be lifted, a sticking of the object to the support surface can be avoided. Therefore, the lifting of the object from the support surface can be facilitated. The air-permeable cavities may for instance be connected by internal channels in the support element, which may have one or more inlets provided at the bottom surface and/or at a side edge of the support element. The air pressuring means can then be connected to these inlets to provide the pressurized air to the air-permeable cavities of the support element.

The air-permeable cavities in the support surface may be arranged regularly or evenly distributed on the support surface. It is also possible that cavities provided as holes or as grooves are arranged within regular patterns, for instance along lines in the plane of the support surface. Also an arrangement of the cavities only in the edge region of the support surface or a denser arrangement of air-permeable cavities in the edge area than in the center area of the support surface is possible.

A support element according to the invention is adapted for usage in a vacuum lifting arrangement according to the invention. The support element comprises a support surface for supporting the object to be lifted by a vacuum lifting device.

In a preferred embodiment, the support element comprises one or more air-permeable cavities allowing for the passage of air through the support element into an object arranged on the support surface.

Preferably, the air-permeable cavities are formed by at least one porous layer of the support surface, by one or more grooves in the support surface and/or by one or more through-holes in the support surface of the support element.

A method for lifting a preform element forming at least a section of a wind turbine blade according to the invention uses a vacuum lifting device according to the invention or a vacuum lifting arrangement according to the invention.

For lifting a preform element, which is used for manufacturing a wind turbine blade, in particular a mold may be provided as a support element comprising the support surface. The mold element may for instance be a metal tray with a convex or concave shape, on which the preform element is assembled prior to the lifting. The mold surface element may therefore be used as support element and in a vacuum lifting arrangement.

After the consolidation of the preform element on the support surface, the preform element is lifted using a vacuum lifting device according to the invention. The preform element can for instance be lifted from the support surface into a larger mold used for manufacturing the wind turbine blade or on a storage device used for storing the preform element. The lifted preform element can be arranged within a vacuum bag surrounding the components forming the preform bag. However, the usage of the vacuum lifting device enables also the lifting of a preform element without the vacuum bag since the vacuum lifting device may also attach to a porous surface created by the textile layers, or layers of a fiber-based material, respectively, of the preform element.

All details and advantages described in relation with the vacuum lifting device according to the invention apply correspondingly to the vacuum lifting arrangement according to the invention and vice versa. Likewise, also the details and advantages described in relation with the vacuum lifting device and the vacuum lifting arrangement according to the invention apply correspondingly to a support element according to the invention as well as to the method for lifting a preform element according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:

The figures show:
- Fig. 1: An embodiment of a vacuum lifting arrangement according to the invention comprising a first embodiment of a vacuum lifting device according to the invention and a support element,
- Fig. 2: a detailed view of the first embodiment of the vacuum lifting device according to the invention,
- Fig. 3: the embodiment of the vacuum lifting arrangement during an embodiment of a method for lifting a preform element,
- Fig. 4: the lifting of a porous object using a standard suction cup,
- Fig. 5: a second embodiment of a vacuum lifting device according to the invention,
- Fig. 6: a detailed view on the second embodiment of the vacuum lifting device,
- Fig. 7: a third embodiment of a vacuum lifting device,
- Fig. 8: a detailed view on the third embodiment of the vacuum lifting device,
- Fig. 9: a further prospective view of the first embodiment of the vacuum lifting device according to the invention,
- Fig. 10: a detailed view on the first embodiment of the vacuum lifting device,
- Fig. 11: a view on a further embodiment of a vacuum lifting arrangement according to the invention,
- Fig. 12: a side view on a second embodiment of a vacuum lifting arrangement according to the invention,
- Fig. 13-16: different side views depicting the structure of a support element of four embodiments of the vacuum lifting arrangement according to the invention,
- Fig. 17: a fifth embodiment of a support element according to the invention,
- Fig. 18: a sixth embodiment of a support element according to the invention, and
- Fig. 19: a detailed view on the edge section of an embodiment of a support element according to the invention.

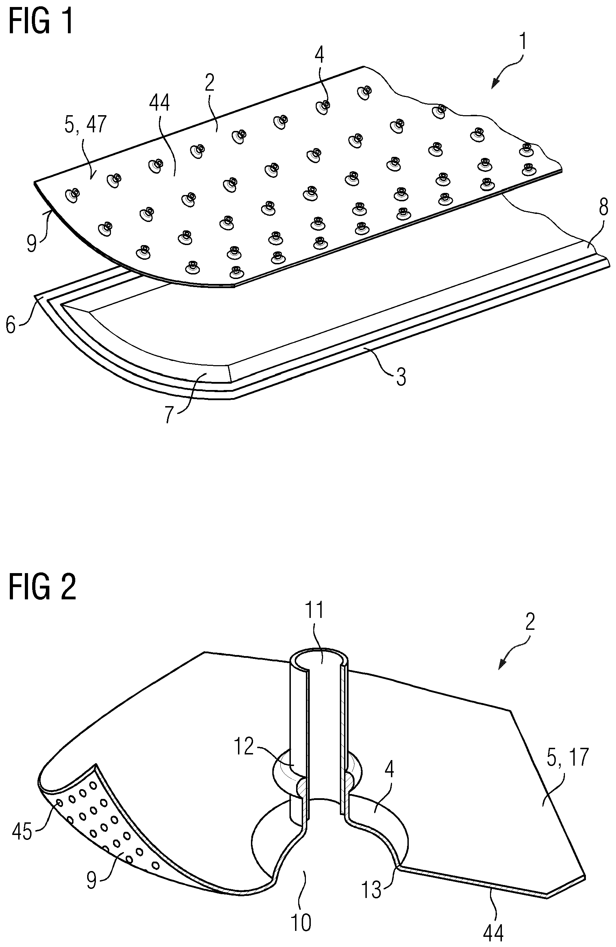

In fig. 1, an embodiment of a lifting arrangement 1 is shown. The lifting arrangement 1 comprises a vacuum lifting device 2 and a support element 3. The vacuum lifting device 2 comprises a plurality of three-dimensional suction cup sections 4 and a flat surface cover 5. The support element 3 comprises a support surface 6, which supports an object 7 to be lifted by the vacuum lifting device 2.

The vacuum lifting device 2 is shown in a distance from a top surface 8 of the object 7 to be lifted. For lifting the object 7, the vacuum device 2 is lowered, so that the bottom surface 9 of the surface cover 2 comes in direct contact with the top surface 8 of the object 7.

In fig. 2, a detailed view on the vacuum lifting device 2 is shown. The suction cup section 4 defines a three-dimensional inner suction volume 10 which communicates with an air guiding structure 11 attached to an opening section 12 of the suction cup section 4.

The surface cover 5 is flat and fabricated from an air-tight material. The surface cover 5 is adapted to cover a portion of the surface 8 of the object 7 to be lifted. The surface cover 5 covers a cover area 44 surrounding the suction cup section 4. The surface cover 5 extends from an edge 13 of the suction cup section 4 around the suction cup section 4. In this embodiment, the surface cover 5 is provided as a mat-shaped cover element 47 that forms a mutual continuous surface cover 17 for all suction cup sections 4.

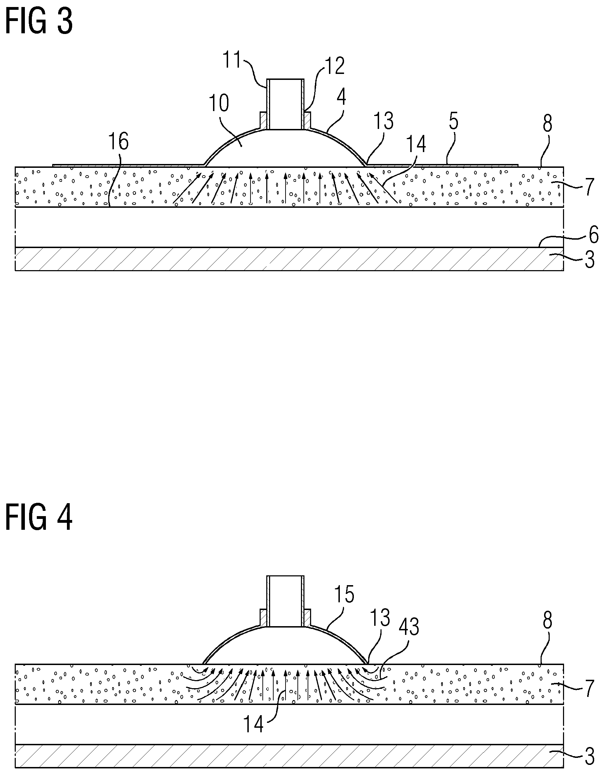

If the surface cover 5 is used to prevent air flowing from the outside into the inner suction volume 10 when an object 7 comprising or consisting of porous material shall be lifted with the lifting device 2. This effect is described in relation to figs. 3 and 4.

In fig. 3, a suction cup section 4 surrounded by a surface cover 5 is shown. In this embodiment, the suction cup 4 comprises a separate surface cover 18 for covering only the surface 8 of the object 7 in the vicinity of one suction cup section 4. It is also possible that the surface cover 5 forms a mutual continuous surface cover 17 for a plurality of suction cup sections 4, as it is depicted in fig. 1.

For a separate surface cover 18, the distance in which the separate surface covers 18 protrude from the suction cup section 4 is at least half the diameter of the suction cup section 4 for a circular suction cup or at least half an edge length in case of a triangular, rectangular or otherwise polynomial-shaped suction cup section 4.

In fig.3, the object 7 is shown lifted and hence in a distance above the support surface 6 of the support element 3. Due to the vacuum, or the low pressure, respectively, which is applied to the inner suction volume 10, an airflow may be established through the porous object 7, or through a porous portion on the object 7, respectively. This airflow is schematically indicated by the arrows 14. The surface cover 5, which surrounds suction cup section 4 protruding from the edge 13 of the suction cup section 4 prevents that an additional airflow occurs from the top surface 8 of the object 7 into the inner suction volume 10, in particular from the direct vicinity of the suction cup section 4.

For comparison, fig. 4 shows a standard suction cup 15 which is attached to the upper surface 8 of the object 7. The standard suction cup 15 does not comprise a surface cover 5 so that additional airflow occurs in the vicinity of the suction cup 15 adjacent to the edge 13, as indicated by the arrows 43. This additional airflow may decrease the lifting ability of the suction cup 15 significantly, so that lifting a porous or at least partly porous object 7 is not possible.

Advantageously, providing the flat surface cover 5 as depicted in fig. 3 prevents this airflow so that the lifting capabilities of the vacuum lifting device 2 are significantly increased. In particular, since the airflow from the vicinity of the suction cup 15 from the top surface 8 of the object 7 would have only to flow a short distance through the object 7, it can be much larger than the airflow from a back surface 16 of the object 7 as it is depicted in fig. 3 by the arrows 14. Therefore, a better adherence of the suction cup section 4 on the object 7 can be obtained by using the surface cover 5.

The provision of the flat surface cover 5 in particular enables to lift objects 7, which are provided as preform elements used in the fabrication of wind turbine blades. These preform elements may comprise one or more layers of a fiber-based material, which has not been infused by a resin yet and therefore shows significant porosity. In addition, also other types if objects, even object without a porous surface, can be lifted using the vacuum lifting device 2 allowing for a flexible use in different manufacturing steps and/or processes.

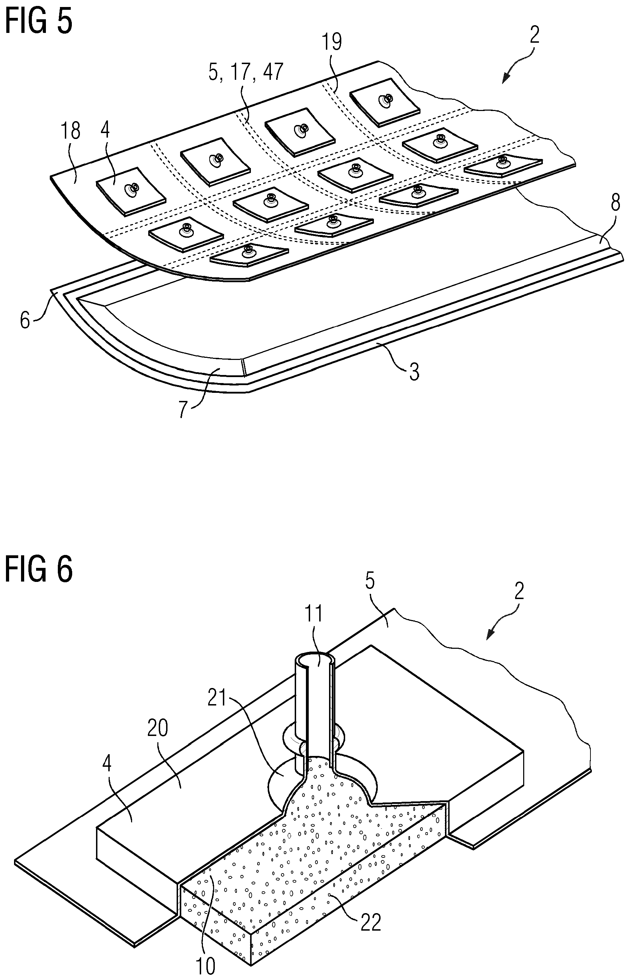

In fig. 5, a second embodiment of a vacuum lifting device 2 is shown. In this embodiment, the flat surface cover 5 is again provided as a mat-shaped cover element 47 providing a mutual continuous surface cover 17 to a plurality of suction cup sections 4. It is alternatively possible, that a plurality of separate surface covers 18 is provided, wherein each surface cover 18 surrounds on of the suction cup sections 4. The size and the geometry of the separate surface covers 18 is schematically shown by the dashed lines separating the surface cover 5 in a plurality of separate surface covers 18. However, the exact width and/or length of the separate surface covers 18, hence the distance in which the separate surface covers 18 protrude from the suction section 4, can be individually chosen, in particular depending on the type of object 7 which has to be lifted.

Fig. 6 shows a detailed view on the second embodiment of the vacuum lifting device 2. The suction cup section 4 comprises a rectangular lower section 20 and a circular upper section 21. The circular upper section 21 may for instance correspond to the suction cup section 4 described in relation to the first embodiment of the vacuum lifting device 2 shown in fig. 2. By additionally providing the lower section 20, a larger inner suction volume 10 can be created. This may be used for increasing the lifting strength of the vacuum lifting device 2, for instance to lift larger and/or heavier objects 7. To allow for a stable shape of the inner suction volume 10, the inner suction volume 10 is partly filled with a porous and therefore air-permeable material 22.

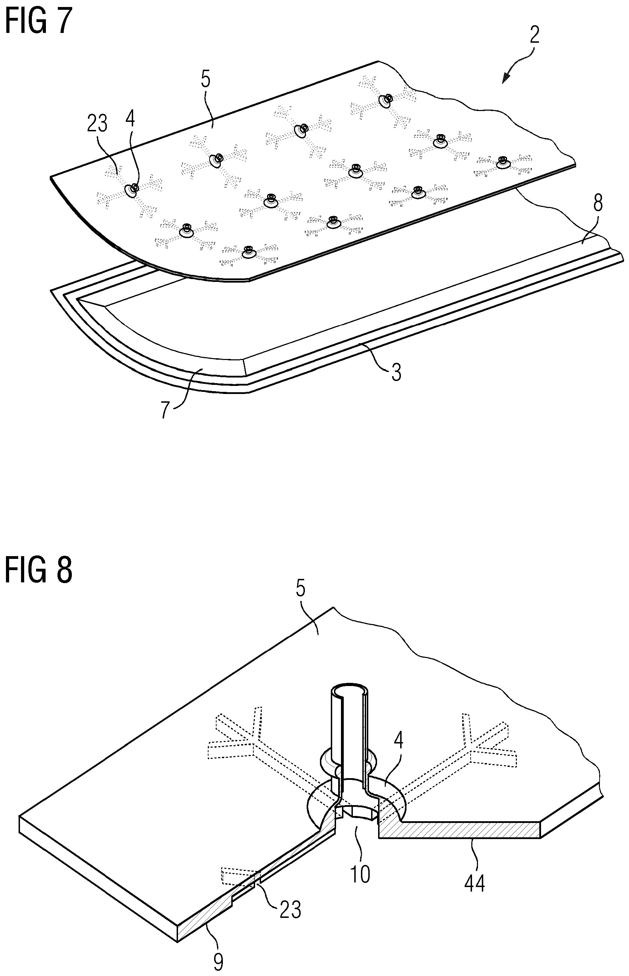

In fig. 7, a third embodiment of a lifting device 2 is shown. In this embodiment, the surface cover 5 comprises a plurality of channels 23, which are communicating with the inner volume 10 of the suction cup section 4. The channels 23 extend through a portion of the cover area 44 and therefore also increase the lifting capability of the lifting device 2.

Fig. 8 shows a detail of the third embodiment of the vacuum lifting device 2. The channels 23 are formed in the lower side 9 of the surface cover 5 and communicate with the inner volume surrounded by the suction cup section 4. The vacuum lifting device 2 comprising a surface cover 5 with the channels 23 may be for instance used for lifting an object with a higher porosity, which requires an additional attachment strength between the vacuum lifting device 2 and the object 7.

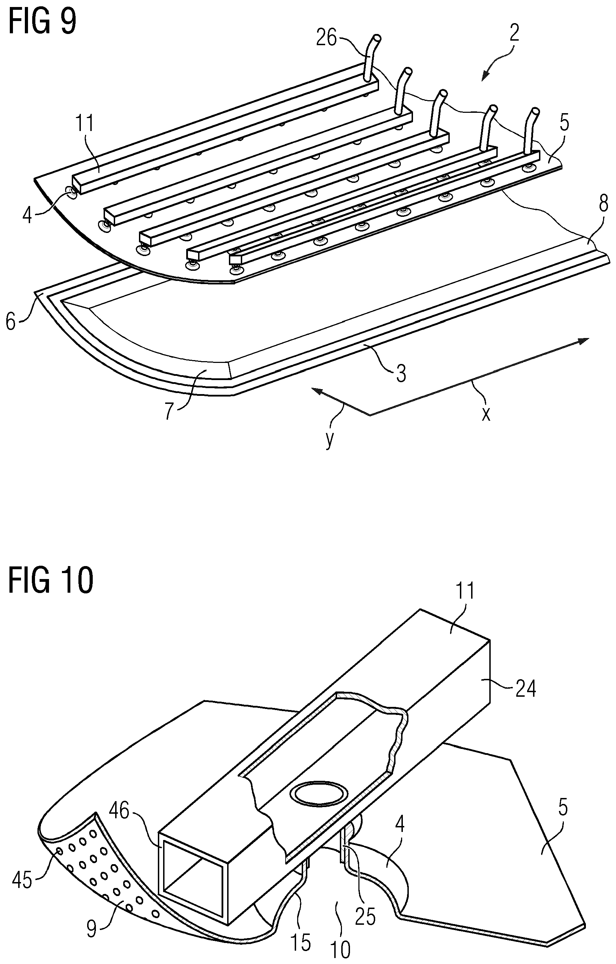

In fig. 9, the first embodiment of the vacuum lifting device 2 from fig. 1 is shown with a plurality of air guiding structures 11 connected to the suction cup sections 4. The air guiding structures 11 are arranged in parallel along a longitudinal direction x of the object 7 to be lifted. This advantageously allows for a relatively high stiffness of the vacuum lifting device 2 in the longitudinal direction x. In the perpendicular direction y, the vacuum lifting device 2 shows a certain flexibility, so that it advantageously can adapt to the concave top surface 8 of the object 7 to be lifted. Advantageously, by the lifting device 2, differently shaped objects, in particular objects 7 with concave or convex top surfaces 8 of different radii, can be lifted.

The air guiding structures 11 can be connected to an externally placed pumping means (not shown) of the lifting device 1. Therefore, for instance one edge of the air guiding structures 11 can be coupled to connection means 26 like tubes and/or hoses to establish a connection to the pumping means. This allows for establishing a vacuum, or a low pressure, respectively in the inner suction volumes 10 of the suction cup sections 4.

Fig. 10 shows a detail of the air guiding structure 11. The air guiding structure 11 is provided as a hollow profile with a rectangular cross-section 46. The connection to the suction cup sections 4 occurs by a plurality of cylindrical connection sections 25 protruding from a surface 24 of the profile 11 and coupled to the opening section 12 of one of the suction cup sections 4. Depending on the geometry of the suction cup sections 4, also other shapes of the connection sections 25 and/or the remainder of the air guiding structures 11 are possible.

It is possible, that each suction cup section 4, or a plurality of suction cup sections 4, for instance a group of suction cup sections 4 connected to a mutual air guiding means 11, are connected to a pressure sensor, a flow sensor and/or a valve. This allows for pressure and/or flow measurement at these suction cup sections 4. By the valves, also shutting individual suction cup sections 4 and/or groups of suction cup sections 4 becomes possible, for instance when a loss of vacuum occurs under one or more suction cup sections 4. In addition, the air pumping means may be adapted for individual control of the air pressure in the individual suction cup sections 4, or for the individual groups of suction cup sections 4, respectively, so that in case of a failure of one or more suction cup sections in one group, the vacuum pressure in the other suction cup sections 4 can be increased so that the loss of adherence to one or more suction cup sections can be compensated by the remainder of the suction cup sections 4.

The air guiding structures 11 can be made for instance from steel to stabilize the vacuum lifting arrangement 2. To allow for lifting, the air guiding structures can be connected to a lifting section like a hook that allows for coupling the vacuum lifting arrangement with a lifting means (not shown) like a crane or a hoist. In addition or alternative, the connection means 26 may be secured against the air guiding structures 11 and/or to the suction cup sections 4, so that the lifting section may be attached to the connection means which are then hanging underneath the lifting section and above the surface cover 5 and the suction cup sections 4.

In case of a plurality of surface covers 5 provided as separate surface cover 18, each suction cup section 4 and the adjacent separate surface cover 18 may be connected to a lifting means directly via an individual connection means 18, wherein the individual connection means 18 each may have a different length to account for the shape of the object 7 to be lifted. As connection means 18, again a tube or a hose may be used.

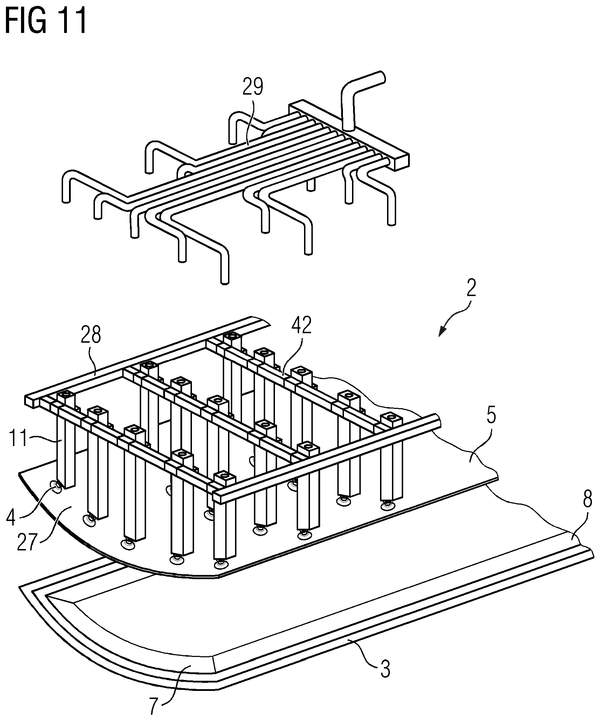

Fig. 11 depicts a further embodiment of the vacuum lifting device 2. In this embodiment, the air guiding structures 11, which are again provided as hollow profiles, are arranged so that they protrude at least essentially vertical to a top surface 27 of the cover portion 5. The air guiding structures 11 are each connected with one end to a suction cup section 4 and form each a part of a frame structure 28 which is at least sectionally extending vertically and/or horizontally to the surface cover 5.

Besides the air guiding structures 11, additional struts 42 are provided connecting two or more air guiding means 11, for instance by a releasable locking means, for forming a stable frame structure 28. In addition, this frame structure 28 allows for adapting the curvature of the surface cover 5 by providing air-guiding means 11 with different lengths so that the lifting device 2 may be used for lifting differently shaped objects 7.

The air guiding structures 11 may be connected to one or more connecting elements 29, which allow for connecting the suction cup sections 4, or the air-guiding structures 11, respectively, to an external pressure means as previously described. Also in this case, the air guiding structures 11 and or the suction cup sections 4 may be connected each or in groups to a pressure sensor, a flow sensor and/or a valve.

By providing valves communicating with the suction cup sections 4, or the respective inner suction volumes 10, respectively, a lifting device 2 may be used for lifting object 7 of different sizes. Unused suction cup sections 4, which are not in contact with the top surface 8 of the object 7, may be switched off so that no additional air is sucked in by the pumping means through these suction cup sections 4.

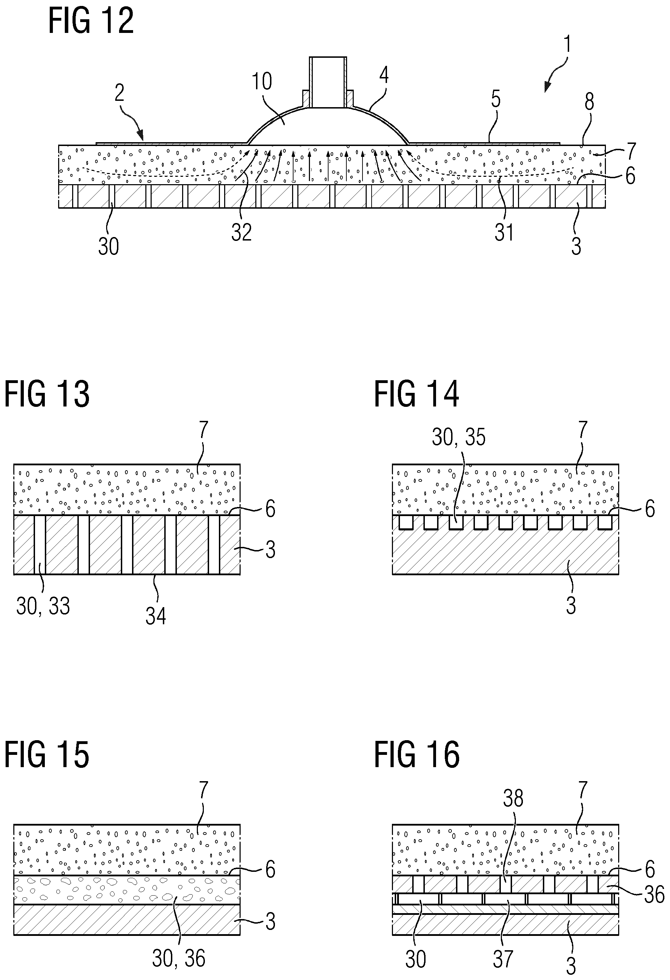

In fig. 12, a second embodiment of a vacuum lifting arrangement 1 is shown. In this embodiment, the support element 3 comprises a plurality of air-permeable cavities 30 which allow for the passage of air through the support element 3 into the object 7 attached to the vacuum lifting device 2. Due to the porosity of the object 7, an airflow through the object 7 is possible, at least in certain sections of the object 7.

When using a support element 3 without air-permeable cavities 30, an airflow through the support element 3 is not possible. In this case, an airflow as depicted by the dashed arrows 31 would be created, wherein the air can only flow into the object 7 from its edge regions. This may cause the object 7 to be attached to the surface of the support element 3 by the vacuum created in the inner suction volumes 10. This could circumvent a lifting of the object 7 since the vacuum applied by the suction cup sections 4 would cause the object 7 to stick on the support surface 6 of the support element 3. By providing a support surface 6 with air-permeable cavities 30, an airflow through the support element 3 becomes possible. This airflow is schematically indicated by the arrows 32.

In fig. 13, a first embodiment the support element 3 comprising air-permeable cavities 30 in the support surface 6 is shown. In this embodiment, the air-permeable cavities 30 are provided as through-holes 33, which extend from a backside surface 34 of the support element 3 to its support surface 6. Therefore, an airflow through the support element 3 into the object 7 is enabled.

Fig. 14 shows a second embodiment of the support element 3, in which the air-permeable cavities 30 are provided as grooves 35. The grooves 35 may for instance be open at an edge region of the support element 3, so that air can stream in from the edge region into the grooves 35 and therefore towards the support surface 6 of the support element 3. Also in this case, an airflow into the object 7 becomes possible to allow for lifting the object 7 from the support surface 6.

In fig. 15 a third embodiment of the support element 3 is shown. In this embodiment, the air-permeable cavities 30 are provided by a layer 36 of a porous material forming the support surface 6. The porous material has in particular a higher porosity and therefore a higher permeability for air than the object 7 to be lifted. By the porous layer 36, an increase of air from the sides of the porous layer 36 and/or from sections of the support surface 6, which are not covered by the object 7, is possible. This also allows for an easier lifting of the object 7 using the vacuum lifting device 2.

Fig. 16 depicts a fourth embodiment of a support element 3 of a vacuum lifting arrangement 1. In this case, the air-permeable cavities 30 are provided by a layer 36 of an air-permeable material which comprises an at least partly hollow section 37 as well as a plurality of channels 38 connecting the hollow section 37 to the support surface 6 of the support element 3. The air-permeable layer 36 may for instance be a sandwich fiber material-based structure comprising the hollow inner section 37 arranged in between two air-tight or air-permeable layers. In the upper layer, additional channels 38 connecting the hollow section 37 to the support surface 6 are provided. This allows for supplying air into the hollow section 37 to facilitate the lift-off of the object 7 from the supporting surface 6.

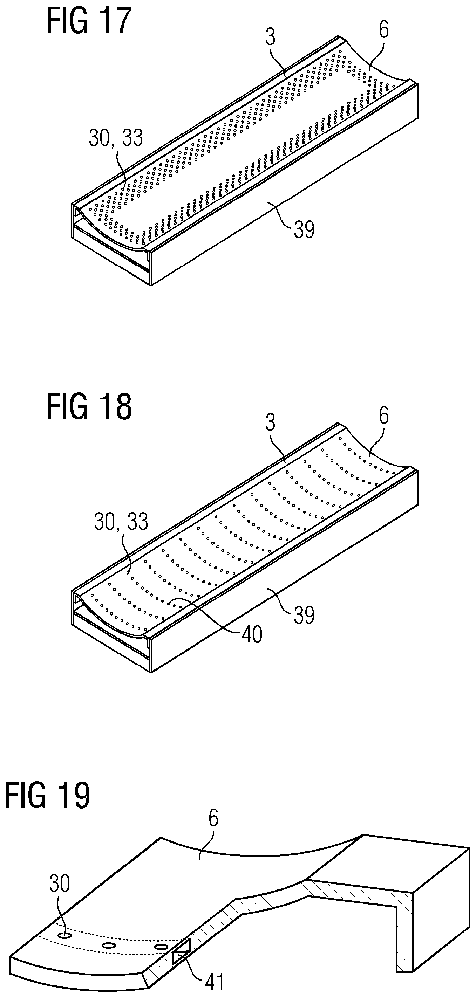

Fig. 17 shows a perspective view on a fifth embodiment support element 3 according to the invention. In this embodiment, the air-permeable cavities 30 are provided as holes 33 which are mainly arranged in an edge area of the support surface 6. As can be seen, the support surface 3 is provided as a concave-shaped metal tray usable for the fabrication of preform elements for wind turbine blades. The support element 3 itself is supported on a frame structure 39, wherein the support element 3 can be removed from the frame structure 39. The support element 3 can also be called a mold surface or a mold element, respectively.

By providing the air guiding cavities 30 in an edge area of the support surface 6, a sticking of the edges of the object 7 to be lifted on the support element 3 can be prevented.

Depending on the structure of the object 7 to be lifted, also other arrangements of the air-permeable cavities 30 is possible.

In fig. 18, a sixth embodiment of a support element 3 is shown. This embodiment corresponds to the first embodiment, but has another distribution of the air-permeable cavities 30 at the surface. In the second embodiment, the holes 33 forming the air-permeable cavities 30 are arranged along a plurality of lines 40.

Fig. 19 depicts a detail on a support element 3, wherein an edge region of the support element 3 is partly cut. The support element 3 comprises an internal channel 41 communicating with the air-permeable cavities 30 arranged in the support surface 6 of the support element 3. The channels 41 may either be open to the surrounding so that air can stream in when the vacuum is applied to an object 7 arranged on the support element 3.

For further facilitating the lifting, in all embodiments of the support element 3, a connection of the air-permeable cavities 30 to an air pressuring means (not shown) of the vacuum lifting arrangement 1 is possible. This allows for providing pressurized air to the cavities 30 so that the lifting of the object 7 from the support surface 6 of the support element 3 is further facilitated.

In all embodiments of the vacuum lifting device 2, the cover portion 5 can be fabricated from an air-tight and flexible material. The cover portion 5 can for instance be made from silicone, rubber, or another polymer material. Also, the suction cup section 4 can be made of such a material.

The cover portion 5 and the suction cup section 4 can be provided as a one-piece element or as separate elements. In case of separate elements, the cover portion 5 can for instance be provided as a mat-shaped element or as a cover mat comprising a plurality of holes corresponding the suction cup sections 4, so that the suction cup sections 4 can be arranged on the separately arrangeable mat-shaped element, or the cover mat, respectively. Alternatively, also a permanent or releasable connection between the suction cup sections 4 and the mat-shaped cover element 47 for forming a mutual surface cover 17 for the respective suction cup sections 4 is possible.

In all embodiments, the vacuum lifting device 2 can comprise one suction cup section 4 or any other number of suction cup sections 4. The suction cup sections 4 may have a diameter between 5 cm and 50 cm, in particular between 10 cm and 30 cm. However, also other sizes of suction cup sections 4 may be provided, depending on the object 7 to be lifted.

It is also possible that all or some of the suction cup sections 4 have an individual, separate surface cover 18, as it was shown in fig. 3. Also, combinations of suction cup sections 4 with individual cover sections 18 and pluralities of suction cup sections 4 having surface covers 5 provided as a mutual continuous surface cover 17 is possible.

In order to improve the adherence of the vacuum lifting device 2 on porous surfaces 8 of objects 7, the bottom surface 9 of the surface covers 5 can have a structured surface in all embodiments. The structure 45 can for instance be applied by providing a plurality of knobs as schematically indicated in figs. 2 and 9. Alternatively, the structure 45 can also be provided by a certain surface roughness of the bottom surface 9 of the surface cover 5 or by the provision of grooves or the like in the bottom surface 9 of the surface cover 5. Alternatively, a smooth surface 9 of the surface cover 5 is also possible.

In all embodiments, the surface cover 5 may be at least partly flexible. The surface cover 5 can comprise one or more shaping sections that define at least partly a shape of the surface cover 5. The shaping sections may for instance be provided additionally or alternatively to the air guiding means 11 as previously described. Shaping sections may be created by thicker portions of the surface cover 5, in which for instance a thicker material is applied. Also, an application of one or more layers of additional material with a higher stiffness, for instance a canvas material, or the like, on top of an air-tight material is possible for forming the surface cover 5. Furthermore, also plastically deformable elements, for instance metal wires or the like, may be integrated into the surface cover 5 in order to provide a certain shape.

Although the present invention has been described in detail with reference to the preferred embodiment, the present invention is not limited by the disclosed examples from which the skilled person is able to derive other variations without departing from the scope of the invention that is defined by the claims.

## Claims

1. Vacuum lifting device comprising at least one three-dimensional suction cup section (4) defining an inner suction volume (10) and at least one flat, air-tight surface cover (5), wherein the surface cover (5) is adapted to cover a portion of a porous surface (8) of a lifted object (7) in a cover area (44) surrounding the suction cup section (4), wherein the surface cover (5) extends from an edge (13) of the suction cup section (4) around the suction cup section (4).

2. Vacuum lifting device according to claim 1, **characterized in that** the lifting device (2) comprises a plurality of suction cup sections (4), wherein each suction cup section (4) comprises a separate surface cover (18), or wherein the plurality of suction cup sections and/or a mutual continuous surface cover (17) of the suction cup sections is formed by at least one mat-shaped cover element (47).

3. Vacuum lifting device according to claim 1 or 2, **characterized in that** the surface cover (5) is at least partly flexible and/or that the surface cover (5) comprises one or more shaping sections that define at least partly a shape of the surface cover (5).

4. Vacuum lifting device according to one of the preceding claims, **characterized in that** the surface cover (5) comprises a flat or a structured surface for covering the surface (8) of the object (7) to be lifted.

5. Vacuum lifting device according to one of the preceding claims, **characterized in that** the at least one suction cup section (4) is connected to at least one flow sensor, at least one pressure sensor and/or at least one valve.

6. Vacuum lifting device according to one of the preceding claims, **characterized in that** the surface cover (5) comprises one or more channels (23) communicating with the inner suction volume (10), wherein the channels (23) extend through a portion of the cover area (44).

7. Vacuum lifting device according to one of the preceding claims, **characterized in that** the inner suction volume (10) is at least partly filled with an air permeable material (22).

8. Vacuum lifting device according to one of the preceding claims, **characterized in that** the lifting device (2) comprises at least one elongated air-guiding structure (11) communicating with the inner suction volume (10).

9. Vacuum lifting device according to claim 8, **characterized in that** the lifting device (2) comprises a plurality of air-guiding structures (11), wherein the air guiding structures (11) are arranged in parallel to each other and/or to the surface cover (5), or wherein the air guiding structures (11) form at least a part of a frame structure (28) at least sectionally extending vertically and/or horizontally to the surface cover (5).

10. Vacuum lifting arrangement comprising a vacuum lifting device (2) according to one of the preceding claims and a support element (3) comprising a support surface (6) for supporting the object (7) to be lifted.

11. Vacuum lifting arrangement according to claim 10, **characterized in that** the support element (3) comprises one or more air-permeable cavities (30) allowing for the passage of air through the support element (3) into an object (7) arranged on the support surface (6).

12. Vacuum lifting arrangement according to claim 11, **characterized in that** the air-permeable cavities (30) are formed by at least one layer (36) of an at least partly air-permeable and/or porous material of the support surface (6), by one or more grooves (35) in the support surface (6) and/or by one or more through-holes (33) in the support surface (6) of the support element (3).

13. Vacuum lifting arrangement according to claim 11 or 12, **characterized in that** it comprises at least one air pressuring means connected to the air-permeable cavities (30) and adapted for providing pressurized air to the cavities (30).

14. Method for lifting a preform element forming at least a section of a wind turbine blade using a vacuum lifting device (2) according to claims 1 to 9 or a vacuum lifting arrangement (1) according to claims 10 to 13.

## Patentansprüche

1. Vakuumhebevorrichtung, umfassend mindestens einen dreidimensionalen Saugnapfabschnitt (4), der ein inneres Saugvolumen (10) definiert, und mindestens eine flache, luftdichte Flächenabdeckung (5), wobei die Flächenabdeckung (5) dazu ausgelegt ist, einen Teil einer porösen Fläche (8) eines angehobenen Objekts (7) in einem Abdeckungsbereich (44), der den Saugnapfabschnitt (4) umgibt, abzudecken, wobei sich die Flächenabdeckung (5) von einer Kante (13) des Saugnapfabschnitts (4) um den Saugnapfabschnitt (4) erstreckt.

2. Vakuumhebevorrichtung nach Anspruch 1, **dadurch gekennzeichnet, dass** die Hebevorrichtung (2) eine Vielzahl von Saugnapfabschnitten (4) umfasst, wobei jeder Saugnapfabschnitt (4) eine separate Flächenabdeckung (18) umfasst oder wobei die Vielzahl von Saugnapfabschnitten und/oder eine gemeinsame durchgehende Flächenabdeckung (17) der Saugnapfabschnitte durch mindestens ein mattenförmiges Abdeckelement (47) gebildet ist/sind.

3. Vakuumhebevorrichtung nach Anspruch 1 oder 2, **dadurch gekennzeichnet, dass** die Flächenabdeckung (5) mindestens teilweise flexibel ist und/oder dass die Flächenabdeckung (5) einen oder mehrere Formabschnitte umfasst, die mindestens teilweise eine Form der Flächenabdeckung (5) definieren.

4. Vakuumhebevorrichtung nach einem der vorhergehenden Ansprüche, **dadurch gekennzeichnet, dass** die Flächenabdeckung (5) eine flache oder eine strukturierte Fläche zum Abdecken der Fläche (8) des anzuhebenden Objekts (7) umfasst.

5. Vakuumhebevorrichtung nach einem der vorhergehenden Ansprüche, **dadurch gekennzeichnet, dass** der mindestens eine Saugnapfabschnitt (4) mit mindestens einem Durchflusssensor, mindestens einem Drucksensor und/oder mindestens einem Ventil verbunden ist.

6. Vakuumhebevorrichtung nach einem der vorhergehenden Ansprüche, **dadurch gekennzeichnet, dass** die Flächenabdeckung (5) einen oder mehrere Kanäle (23) umfasst, die mit dem inneren Saugvolumen (10) in Verbindung stehen, wobei sich die Kanäle (23) durch einen Teil des Abdeckbereichs (44) erstrecken.

7. Vakuumhebevorrichtung nach einem der vorhergehenden Ansprüche, **dadurch gekennzeichnet, dass** das innere Saugvolumen (10) mindestens teilweise mit einem luftdurchlässigen Material (22) gefüllt ist.

8. Vakuumhebevorrichtung nach einem der vorhergehenden Ansprüche, **dadurch gekennzeichnet, dass** die Hebevorrichtung (2) mindestens eine längliche Luftführungsstruktur (11) umfasst, die mit dem inneren Saugvolumen (10) in Verbindung steht.

9. Vakuumhebevorrichtung nach Anspruch 8, **dadurch gekennzeichnet, dass** die Hebevorrichtung (2) eine Vielzahl von Luftführungsstrukturen (11) umfasst, wobei die Luftführungsstrukturen (11) parallel zueinander und/oder zu der Flächenabdeckung (5) angeordnet sind oder wobei die Luftführungsstrukturen (11) mindestens einen Teil einer Rahmenstruktur (28) bilden, die sich mindestens abschnittsweise vertikal und/oder horizontal zu der Flächenabdeckung (5) erstreckt.

10. Vakuumhebeanordnung, umfassend eine Vakuumhebevorrichtung (2) nach einem der vorhergehenden Ansprüche und ein Stützelement (3), das eine Stützfläche (6) zum Stützen des anzuhebenden Objekts (7) umfasst.

11. Vakuumhebeanordnung nach Anspruch 10, **dadurch gekennzeichnet, dass** das Stützelement (3) einen oder mehrere luftdurchlässige Hohlräume (30) umfasst, die den Durchgang von Luft durch das Stützelement (3) in ein Objekt (7) ermöglichen, das auf der Stützfläche (6) angeordnet ist.

12. Vakuumhebeanordnung nach Anspruch 11, **dadurch gekennzeichnet, dass** die luftdurchlässigen Hohlräume (30) durch mindestens eine Schicht (36) aus einem mindestens teilweise luftdurchlässigen und/oder porösen Material der Stützfläche (6), durch eine oder mehrere Nuten (35) in der Stützfläche (6) und/oder durch ein oder mehrere Durchgangslöcher (33) in der Stützfläche (6) des Stützelements (3) gebildet sind.

13. Vakuumhebeanordnung nach Anspruch 11 oder 12, **dadurch gekennzeichnet, dass** sie mindestens ein Luftdruckbeaufschlagungsmittel umfasst, das mit den luftdurchlässigen Hohlräumen (30) verbunden und dazu ausgelegt ist, den Hohlräumen (30) Druckluft bereitzustellen.

14. Verfahren zum Anheben eines Vorformelements, das mindestens einen Abschnitt einer Windturbinenschaufel bildet, unter Verwendung einer Vakuumhebevorrichtung (2) nach Anspruch 1 bis 9 oder einer Vakuumhebeanordnung (1) nach Anspruch 10 bis 13.

## Revendications

1. Dispositif de levage sous vide comprenant au moins une section de ventouse tridimensionnelle (4) définissant un volume d'aspiration interne (10) et au moins une couverture de surface étanche à l'air et plate (5), dans lequel la couverture de surface (5) est adaptée pour couvrir une partie d'une surface poreuse (8) d'un objet levé (7) dans une zone de couverture (44) entourant la section de ventouse (4), dans lequel la couverture de surface (5) s'étend à partir d'un bord (13) de la section de ventouse (4) autour de la section de ventouse (4).

2. Dispositif de levage sous vide selon la revendication 1, **caractérisé en ce que** le dispositif de levage (2) comprend une pluralité de sections de ventouse (4), dans lequel chaque section de ventouse (4) comprend une couverture de surface distincte (18), ou dans lequel la pluralité de sections de ventouse et/ou une couverture de surface continue commune (17) des sections de ventouse est formée par au moins un élément de couverture en forme de tapis (47).

3. Dispositif de levage sous vide selon la revendication 1 ou 2, **caractérisé en ce que** la couverture de surface (5) est au moins partiellement flexible et/ou **en ce que** la couverture de surface (5) comprend une ou plusieurs sections de mise en forme qui définissent au moins partiellement une forme de la couverture de surface (5).

4. Dispositif de levage sous vide selon l'une des revendications précédentes, **caractérisé en ce que** la couverture de surface (5) comprend une surface plate ou une surface structurée pour couvrir la surface (8) de l'objet (7) à lever.

5. Dispositif de levage sous vide selon l'une des revendications précédentes, **caractérisé en ce que** l'au moins une section de ventouse (4) est reliée à au moins un capteur de débit, au moins un capteur de pression et/ou au moins une vanne.

6. Dispositif de levage sous vide selon l'une des revendications précédentes, **caractérisé en ce que** la couverture de surface (5) comprend un ou plusieurs canaux (23) communiquant avec le volume d'aspiration interne (10), dans lequel les canaux (23) s'étendent à travers une partie de la zone de couverture (44).

7. Dispositif de levage sous vide selon l'une des revendications précédentes, **caractérisé en ce que** le volume d'aspiration interne (10) est au moins partiellement rempli d'un matériau perméable à l'air (22).

8. Dispositif de levage sous vide selon l'une des revendications précédentes, **caractérisé en ce que** le dispositif de levage (2) comprend au moins une structure de guidage d'air allongée (11) communiquant avec le volume d'aspiration interne (10).

9. Dispositif de levage sous vide selon la revendication 8, **caractérisé en ce que** le dispositif de levage (2) comprend une pluralité de structures de guidage d'air (11), dans lequel les structures de guidage d'air (11) sont agencées parallèlement les unes aux autres et/ou à la couverture de surface (5), ou dans lequel les structures de guidage d'air (11) forment au moins une partie d'une structure de cadre (28) s'étendant au moins par sections verticalement et/ou horizontalement par rapport à la couverture de surface (5).

10. Agencement de levage sous vide comprenant un dispositif de levage sous vide (2) selon l'une des revendications précédentes et un élément de support (3) comprenant une surface de support (6) pour supporter l'objet (7) à lever.

11. Agencement de levage sous vide selon la revendication 10, **caractérisé en ce que** l'élément de support (3) comprend une ou plusieurs cavités perméables à l'air (30) permettant le passage de l'air à travers l'élément de support (3) dans un objet (7) agencé sur la surface de support (6).

12. Agencement de levage sous vide selon la revendication 11, **caractérisé en ce que** les cavités perméables à l'air (30) sont formées par au moins une couche (36) d'un matériau au moins partiellement perméable à l'air et/ou poreux de la surface de support (6), par une ou plusieurs rainures (35) dans la surface de support (6) et/ou par un ou plusieurs trous traversants (33) dans la surface de support (6) de l'élément de support (3).

13. Agencement de levage sous vide selon la revendication 11 ou 12, **caractérisé en ce qu'**il comprend au moins un moyen de pressurisation d'air relié aux cavités perméables à l'air (30) et adapté pour fournir de l'air sous pression aux cavités (30).

14. Procédé pour lever un élément de préforme formant au moins une section d'une pale d'éolienne en utilisant un dispositif de levage sous vide (2) selon les revendications 1 à 9 ou un agencement de levage sous vide (1) selon les revendications 10 à 13.
